# EUROPEAN PATENT SPECIFICATION

(11) **EP 1 356 252 B1**
(45) Date of publication and mention of the grant of the patent: **12.03.2008**
(21) Application number: 02703210.1
(22) Date of filing: 23.01.2002
(51) Int. Cl.: G01F 1/00

(54) **METHOD AND APPARATUS FOR DISPENSING MICRODROPLETS**
VERFAHREN UND VORRICHTUNG ZUR DISPENSION VON MIKROTROPFEN
APPAREIL DE DISTRIBUTION DE MICRO-GOUTTES

(30) Priority: 02.02.2001 US 776427
(43) Date of publication of application: 29.10.2003
(73) Proprietor: Packard Instrument Company, Inc., Downers Grove, IL 60515 (US)
(72) Inventor: ZWEIFEL, Ronald, A., Naperville, IL 60540 (US); HAHN, Christopher, M., Downers Grove, IL 60515 (US)
(74) Representative: Grünecker, Kinkeldey, Stockmair & Schwanhäusser Anwaltssozietät
(86) International application number: PCT/US2002/001916
(87) International publication number: WO 2002/070999

(56) References cited:
- EP-A- 0 508 531
- EP-A- 0 714 022
- EP-A- 0 810 438
- EP-A- 1 093 855
- US-A- 4 715 413
- US-A- 4 864 856
- US-A- 4 912 976
- US-A- 5 554 811

## Description

### Background of the Invention

The invention relates generally to apparatus for depositing small droplets of liquid. More particularly, the invention has application to the type of apparatus discussed in, for example, in PCT publication WO 98/45205, assigned to the Packard Instrument Company, which describes equipment capable of aspirating a liquid and dispensing it in droplets having a volume in the range of 5 to 500 picoliters. Such small droplets are ejected from the tip of a capillary by applying a voltage pulse to a piezoelectric transducer surrounding the capillary, producing a force sufficient to dispense one or a series of small droplets having a diameter similar to that of the opening of the capillary. Although there are various end uses for such equipment, it is particularly useful in connection with microscale chemical and biological analysis. The published PCT patent application suggests means for cleaning the tip of such capillaries which may easily become clogged. The present invention solves another problem to which the equipment may be subject, namely damage to the capillaries during the use of the apparatus. In addition, the invention has application to determining the position of a solid or a liquid surface.

In a typical operation, the tip of a capillary is moved into contact with liquid in a container and the liquid is aspirated, after which the capillary is moved to another location, where the liquid is dispensed in one or more droplets as desired. Then the capillary may be moved to another location, where additional droplets are dispensed or to a wash station where the capillary is cleaned before being used to aspirate and dispense another sample of liquid. It is also possible to maintain the capillary in one location and to move the containers or the surfaces which receive the liquid droplets under the capillary. Generally, such operations require the capillary to be moved vertically downward so that the tip is brought close to the bottom of the sample container or surface and then moved upwardly so that the sample container or surface can be exchanged for another. The capillaries are commonly made of glass and can easily be broken if they contact a sample container or surface. This not only interrupts the process being performed, but it is costly to replace the capillaries and the associated piezoelectric transducers. The breakage problem is multiplied when the number of capillaries is increased or the sizes of the associated sample containers and surfaces are decreased relative to the size of the capillaries.

For most practical applications of this technology the process must be automated. It can be appreciated that if the tip of a capillary is brought to within about 0.4 mm of the bottom of a sample container or another surface, that positioning the tip is difficult to do manually and damage to the tips could easily occur. If multiple capillaries are used, the damage potentially could be very great. Small errors in the positioning of the sample containers or droplet receiving surfaces can cause a capillary to unintentionally contact the wall of the sample container or the surface and to break. This may result from errors in programming, but even if the operator of such equipment has accurately programmed the movement of the capillaries for the necessary movements in three dimensions, it is still possible for errors in positioning of the sample containers or surfaces to lead to expensive damage to the capillaries.

Frequently, the microdispensing apparatus will be used to aspirate samples from a microplate having an array of small wells which hold liquid. A common size is a 96 well plate, measuring about 80 by 120 mm and having round sample wells having a diameter of about 6.5 mm. However, more recently plates having 384 and 1536 wells have become available. These have the advantage of further reducing the volume of the liquids needed to fill a well. However, these newer plates have the disadvantage of having sample wells which are much smaller than those in the 96 well plates. For example, the 384 well plate will have square wells with each side only 3.6 mm, while a 1536 well plate will have square wells with each side less than 1.5 mm. When one considers that the outside dimension of a typical capillary is only about 1 mm, it is evident that there is very little room for error in programming the three-dimensional movement of the capillaries or in positioning of the sample containers or surfaces. Therefore, the present inventors have addressed the problem of preventing or at least minimizing the possibility of contact between the capillaries and the sample containers or surfaces, so that the microdrop dispensing equipment can be used commercially with little or no downtime resulting from damage to the delicate capillaries. Their solution to the problem is described below in detail. In one broad aspect their invention involves using the capillary with its piezoelectric transducer to detect contact with the solid surfaces, such as sample wells or droplet receiving surfaces and taking corrective action to prevent or at least to limit damage to the capillaries. The invention may also be applied to detect the location of a solid or a liquid surface.

Further related prior art is described in the documents US 4,912,976, US 4,715,413, EP 0508531, US 5,554,811, and US 4,864,856.

US 4,912,976 discloses a liquid level sensing system comprising a probe and a reactive element carried by the probe. The reactive element forms a portion of a tuned circuit in a voltage-controlled oscillator. The output of the voltage-controlled oscillator is compared to a fixed frequency reference signal and a frequency/phase detector generates a signal indicative of any difference. The frequency/phase detector output is applied to the voltage-controlled oscillator to maintain the output frequency of the oscillator at the frequency of the reference signal. The output of the frequency/phase detector is also differentiated to develop a pulse when the frequency/phase detector output signal varies rapidly, indicating initial contact between the probe and the surface of a liquid held within a container.

US 4,715,413 discloses an apparatus for manipulating small quantities of liquid, comprising at least one test tube for accommodating the quantity of liquid, a cannula which can be inserted into a vessel, and a control arrangement for controlling the system vessel and cannula in relation to one another in a manner such as to bring the cannula to the bottom of the vessel. The cannula is provided with a suspension structure which is connected to a mechanical or electronic sensor arrangement which records pressure acting axially on the end of the cannula. When pressure is detected, the control arrangement halts further insertion of the cannula into the vessel.

EP 0508531 discloses a method for dispensing liquid into a container which senses the location of the bottom of the container by first sealing the dispensing orifice against the bottom of the container, pressurizing the liquid in the orifice and then backing off the orifice until release of liquid out the orifice is sensed.

US 5,554,811 discloses a sampling system applicable to an automatic chemical analyzer for sampling by sucking and discharging liquid, such as specimens and reagents. The sampling system comprises a pump having a container in which an inner space of a certain volume is formed and an actuator arranged in the inner space to fore a pumping chamber therein. The actuator comprises a base plate having both sides thereon and a piezoelectric element attached to the base plate. Further provided are a tube having one end connected to the pumping cheer, a nozzle connected to another end of the tube, and an element for controlling a driving voltage applied to the piezoelectric element. The piezoelectric element may be composed of two piezoelectric plates attached each to both the sides of the base plate. A piezoelectric sensor is attached to the base plate for detecting distortion of the actuator, a liquid level of specimens and reagents, and error operations such as air suction and jamming.

US 4,864,856 discloses a liquid level detecting device comprises a vibrator for vibrating a sample vessel containing a sample solution, and a piezo-electric element provided on a suction member having an opening for sucking the sample solution. Changes in the output voltage of the piezo-electric element are read out as the suction member is moved vertically, contact of the lower end of the suction member with the sample solution is detected based on the changes in the output voltage, and the liquid level of the sample solution is detected. Alternatively, the liquid level detecting device comprises a vibration transmitting plate for holding a nozzle member to a suction member, a vibrator for vibrating the nozzle member at a predetermined frequency, a frequency control circuit for changing the frequency of vibration, and a detector for detecting extreme values of the output voltage of the vibrator corresponding to changes in the frequency. The liquid level is detected based on changes in the extreme values.

### Summary of the Invention

In one aspect, the invention is a method of detecting when a capillary for dispensing liquids by action of a piezoelectric transducer comes in contact with a surface. The electrical voltage created by the piezoelectric transducer in response to such contact is detected and corrective action can be taken to avoid breakage of the capillary. In a related aspect, the electrical voltage change created when the capillary touches a surface is used to establish the position of a surface, either liquid or solid surface.

In another embodiment, the invention is a method of detecting when a capillary for dispensing liquids by action of a piezoelectric transducer comes into contact with a surface, in which the piezoelectric transducer surrounding the capillary is driven with a low oscillating voltage at its resonant frequency to establish a signal corresponding to the capillary and an inverted signal is created in phase with the signal of the capillary as a reference. When the capillary contacts a surface, the phase shift of the capillary signal relative to the reference signal is detected, and triggers corrective action. In a related aspect, the phase shift just described is used to establish the position of a surface, either liquid or solid. Preferably, the phase shift can be readily detected by summing the voltage potentials and detecting the voltage change.

In another aspect, the invention is an apparatus for dispensing microdrops of liquid by the action of a piezoelectric transducer in which the transducer is used to detect the contact with a solid surface by the capillary used to dispense the microdrops and to prevent damage to the capillary, or alternatively to establish the position of a surface, either liquid or solid. In one embodiment, the voltage produced when contact is made with a surface is made is used to detect contact. In another embodiment, the capillary is driven at its resonant frequency to establish a capillary signal, which is compared with an inverted signal as a reference and the phase shift between the signals resulting from contact of the capillary is detected. Preferably, the phase shift is detected by summing the voltage potentials and detecting the voltage change.

In still another aspect, the invention is the improvement in a capillary equipped with a piezoelectric transducer for expelling small droplets of liquid from the tip of the capillary when a voltage is applied to the piezoelectric transducer, and in which the transducer is used to detect contact with a surface. In one embodiment, the contact with a surface creates a voltage from the force applied to the transducer by contact with a surface. In another embodiment, the capillary is driven at its resonant frequency to establish a capillary signal, which is compared with an inverted reference signal and the phase shift between the signals produced by contact is detected. Corrective action can be taken typically by stopping movement of the capillary to prevent damage to the capillary. Alternatively, the technique can be used to establish the position of a solid or liquid surface.

### Brief Description of the Drawings

Figure 1 is a graph of the voltage generated when a capillary hits a solid surface in the vertical (Z) direction.
Figure 2 is a graph of the voltage generated when a capillary hits a solid surface in the horizontal (X-Y) plane.
Figure 3 is a graph of the voltage generated in a second type of contact of a capillary with a solid surface in the horizontal (X-Y) plane.
Figure 4 is a graph of the unfiltered voltage generated by the excursion when the capillary contacts a solid surface plus an overlay of the amplified voltage produced by the capillary contact. The random noise has not been filtered.
Figure 5 is a block diagram of the control systems used to operate the micro dispensing apparatus and to prevent breakage of the capillary.

### Description of the Preferred Embodiments

### Microdrop Dispensing Apparatus

As mentioned above, the invention has particular relevance to apparatus used to dispense very small drops of liquid, such as those described in detail in PCT publication WO 98/45205 by the Packard Instrument Company. The microdrop dispensing systems will be described briefly here. For more details, reference may be made to the published patent application. The invention is not limited to the specific equipment described there, but may be applied to other equipment employing piezoelectric transducers to dispense drops of liquid.

Two types of liquid dispensing systems are described in WO 98/45205, both of which employ a capillary tube terminating in a smaller dispensing tip having an internal diameter of about 25 to 100 microns and capable of dispensing drops of liquid having a volume of about 5 to 500 picoliters. By surrounding the capillary tube with a piezoelectric transducer, it is possible to apply a voltage pulse, e.g. between about 40 and 300 volts to the transducer, which is mechanically deformed, compressing the capillary and expelling a drop of liquid. When the voltage is applied for a very short time a single drop is expelled. If the voltage is applied with a frequency up to about 1,000 Hz, a series of droplets can be expelled to provide the volume of liquid which one wishes to dispense.

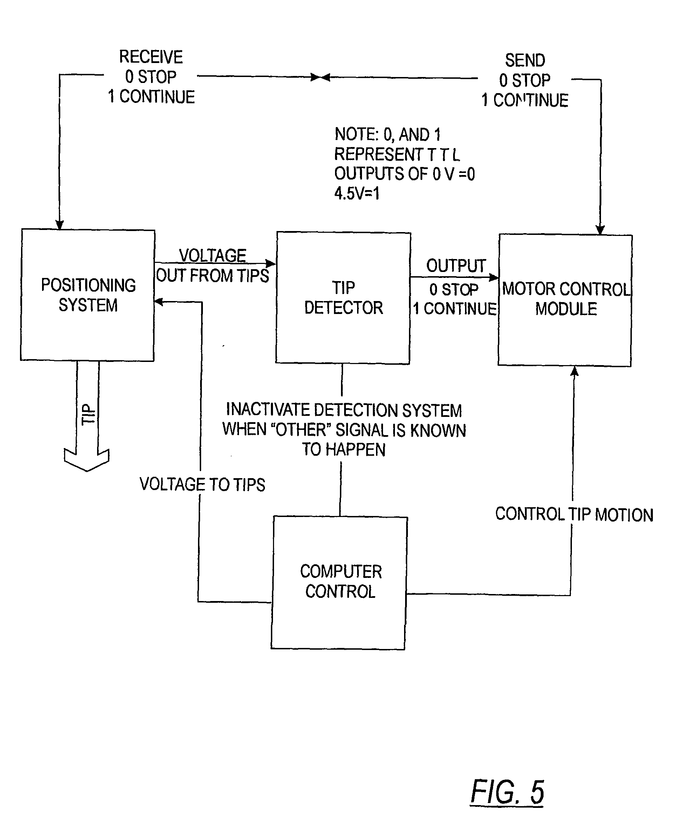

The published patent application describes generally the operation of a robotic system which positions the microdrop dispensing capillary tip over a sample liquid in its container, such a microplate shown in Figure 5 of the application. The tip is moved until it makes contact with the surface of the liquid in the container, which contact may be sensed by a capacitive liquid level sensing system, so that the movement of the capillary is stopped and the liquid is aspirated into the capillary. Then, the capillary can be moved to another location and the aspirated liquid dispensed as desired. The published patent application also describes an optical method of positioning the capillary tip within each well of a microplate.

While the description herein is principally concerned with apparatus in which the capillary is moved from one location to aspirate liquid and to a second location to dispense microdrops of the liquid, it should be understood that the opposite arrangement is feasible and may be preferred for large scale commercial use. That is, in the simplest form, a single capillary is mounted on a moveable support and moved horizontally in the X-Y plane and vertically in the Z direction into a first location, such as the well of a microplate to aspirate a liquid and then to a second location, such as a planar surface on which microdrops of the liquid are dispensed. Thus, the capillary moves while the liquid containers e.g. a sample well or the surface which receives the microdrops are stationary. Alternatively, the capillary could be stationary and the container and surface could be moved under the capillary, which is moved only in the vertical direction (Z). Such an alternative arrangement may be desirable particularly when multiple capillaries are mounted in an array and it is more convenient to move the containers, sample plates and surfaces than to move the array of capillaries. It is of course possible to use an apparatus capable of moving each of the capillaries, the containers, the sample plates, and the surfaces independently for maximum flexibility of operation. Each embodiment is subject to the problems discussed above, since no matter which is used, movement may bring a capillary into contact with a container or a surface, resulting in damage to the capillary.

In practice, it is not desirable to carry out such movements manually, using visual observation by the operator. To assure accuracy in repetitive steps of aspirating and dispensing liquids, computer control of the movements of the capillaries generally will be provided. The operator of the apparatus will instruct the computer to carry out a series of movements intended to transfer liquid from a container and to dispense it into a second container or onto a surface such as a glass slide. For example, a capillary could be instructed to move to a first well containing liquid, aspirate a predetermined amount of the liquid, move to a predetermined location over a glass slide, and dispense a single drop of the liquid there, then move to other positions on the same slide and dispense additional drops of liquid. After dispensing the desired amount of liquid, the capillary tip could be instructed to move to another location where it would be washed before the cycle is repeated. It will be appreciated that such a sequence of movements will take place in three dimensions, usually called X and Y defining the position in a horizontal plane and Z defining the position in the vertical direction. Since the capillaries are very small, one can appreciate that they can be easily damaged if, during their travels in the X, Y and Z directions, they come in contact with an obstacle, such as the well of a microplate or the surface of a glass slide. While it might be thought that the computer control could eliminate concern over such contacts, errors can occur leading to damage of the capillaries. These errors are generally of two types, the first, errors in programming of the computer control and the second, errors in positioning of the containers or the slides. The present inventors cannot prevent errors made by others, but they have developed a method for limiting or preventing the damage to capillaries which could otherwise occur.

The nature of the problem can be understood more easily when the dimensions of the capillary and the associated containers and surfaces and the distance between them are considered. The usual capillary has an internal diameter of about 300-800 microns and an external diameter of about 500-1,000 microns (0.5-1 mm). At the tip the capillary is reduced to an external diameter of about 100 microns and the dispensed droplets are even smaller. The 0.5-1.0 mm o.d. capillary will be inserted into the well of a microplate which has a diameter of no more than 6 mm and, often is as small as 2.6 mm square, sometimes with a 1,536-well microplate a wall of about 1.5 mm square. The capillary tip may approach the bottom of the well within about 0.4 mm or 400 microns, or a similar distance from a glass slide on which it is to deposit a single drop. There is very little room for error in positioning the capillary and experience has shown that damage to the capillary is frequent enough to present a significant problem. Since the capillaries are very small and generally made of glass, very little force is required to break them. Thus, any contact between a capillary and any solid surface which could result in breakage must be detected quickly and corrective action taken at once.

While the above discussion considered the movement of a single capillary, when the microdrop dispensing method is applied on a large scale commercially, it is probable that many dispensing capillaries will be in operation simultaneously. For example, four up to a number equal to the number of containers from which liquid is to be aspirated. Therefore, potentially all of the many capillaries could be broken at the same time by a positioning error. Since each one is expensive, breaking many at one time must be prevented, as is possible with the present invention.

### Detecting and Preventing Damage to Capillary Tips

Each capillary dispenses one or more drops when a piezoelectric transducer surrounding the capillary is activated by applying a brief voltage pulse, thereby compressing the capillary tube and expelling a drop for each pulse. The piezoelectric transducer can operate in a reverse manner, that is, it can create an electrical voltage if it is mechanically strained, a principle which is used for applications such as record players, cigarette lighters, igniters on barbecue grills and some microphones and speakers. The voltage produced by a piezoelectric transducer is related to the force applied to the transducer. In the present invention, the voltages generated and detected are generally quite small compared to the voltage used to compress a capillary tube and expel a liquid droplet, e.g., about 40 to 300 volts. Thus, while it might be anticipated that a capillary with a piezoelectric transducer could produce a voltage if the tip contacts a solid surface, it is not evident that the voltage could be distinguished from the random "noise" resulting from unrelated sources, so that it can be used to prevent breaking the tip, or to establish the position of a surface. The present inventors have found that to be possible, with the methods and apparatus to be described.

When the piezoelectric transducer is distorted mechanically so as to compress the capillary and dispense a liquid droplet, a relatively high voltage is used, as previously discussed. In contrast, when a capillary touches a solid surface during operation of the microdrop dispensing apparatus, a very small voltage of at least 10 millivolts (0.01 volt) is typically produced. At the same time, the capillary is constantly producing "noise", that is, voltage produced by the transducer from mechanical forces introduced by the movement of the capillary, the driving motors, external vibrations, and the like. Thus, if one measures the voltage being produced by the piezoelectric transducer while it is not dispensing droplets, it is found that an irregular random voltage is always being produced, typically of a similar order of magnitude as the voltage produced by contact with a surface. Such noise would not ordinarily be of concern and would be small enough in size as to have no significant effect on the dispensing of droplets. However, it is of a magnitude which can mask the voltage produced by contact of the capillary with a solid surface, especially if the contact is slow, as it often is when contact occurs in the X-Y (horizontal) plane. Vertical contact in the Z direction often produces a more pronounced reaction. Examples of such contacts between a capillary and the wall of a container and between the tip of the capillary in the horizontal plane and a solid surface in the Z direction are shown in the Figures.

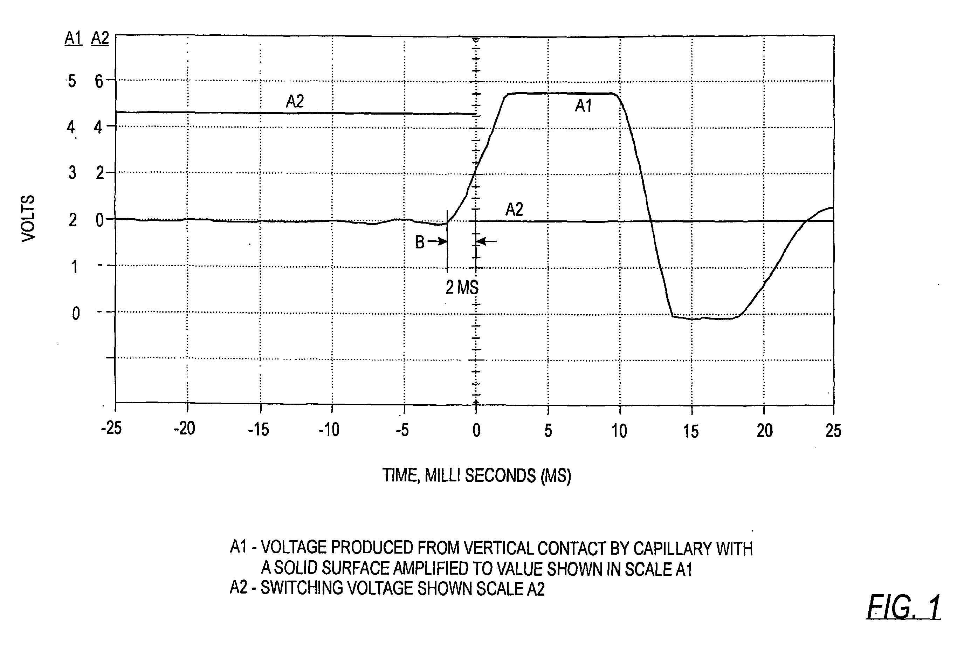

In Figure 1, a "hard" contact was made between a capillary and a solid surface in the Z (vertical) direction. The reference voltage is shown as a baseline bias voltage of two volts. When the capillary touches a surface a voltage change is produced (A1) from the strain in the piezoelectric transducer. The actual voltage has been amplified to show the variation from the baseline bias voltage of 2 volts.

A2 shows the voltage of about 4.5-5 volts used to establish a baseline for determining whether contact has occurred. When the voltage rise caused by the contact of a capillary reaches the switching threshold, the switching voltage is dropped to zero, causing the motor control module (see Fig. 5) to stop movement of the capillary to prevent breakage. The corrective action took place within 2 milliseconds after the voltage increase began, as shown by the voltage drop from 4.5-5 volts to zero as the controlling switch is opened.

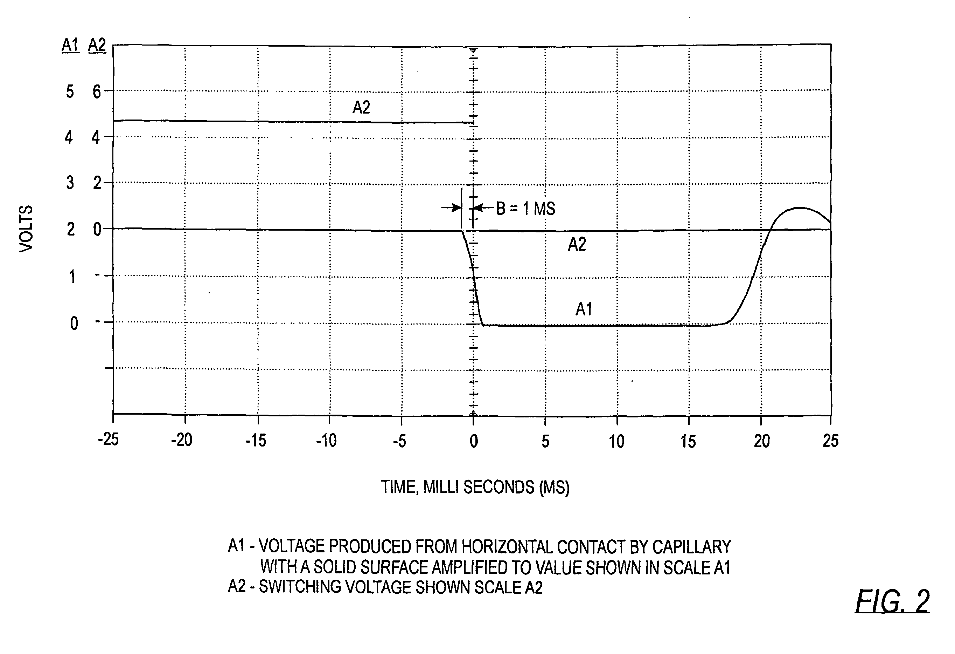

Figure 2 illustrates the result of a capillary moving horizontally at 7.5 inches/second (190 mm/sec) coming into contact with the wall of a cell in a sample plate. As in Figure 1, the reference voltage has been shown as a nominal bias of two volts. When the capillary touched the cell wall, a voltage change was produced and detected in about one millisecond, as can be seen on the horizontal scale, triggering corrective action. In this instance, the voltage excursion was negative, rather than positive, as in Figure 1. Either negative or positive excursions may occur, depending on the direction of the strain on the piezoelectric transducer.

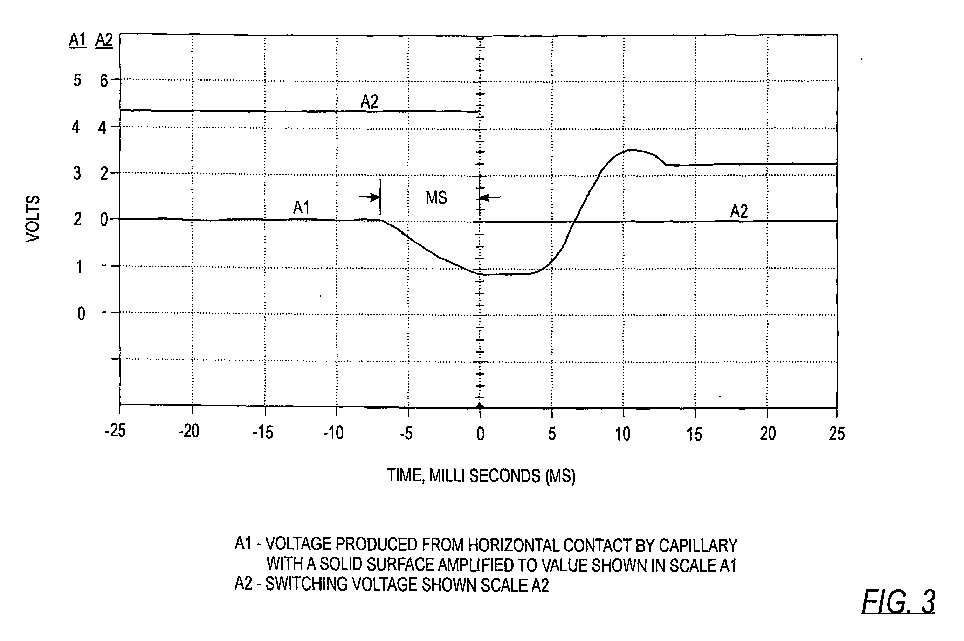

In Figure 3, a "soft" contact was made between a capillary moving at 7.5 inches/second (190 mm/sec) and a solid surface in the X-Y plane. The voltage excursion was slower than in Figure 2, but the result was similar. In about 7 milliseconds, the voltage excursion in A1 was detected and corrective action taken, as shown by the drop to zero voltage from the switching circuit (A2).

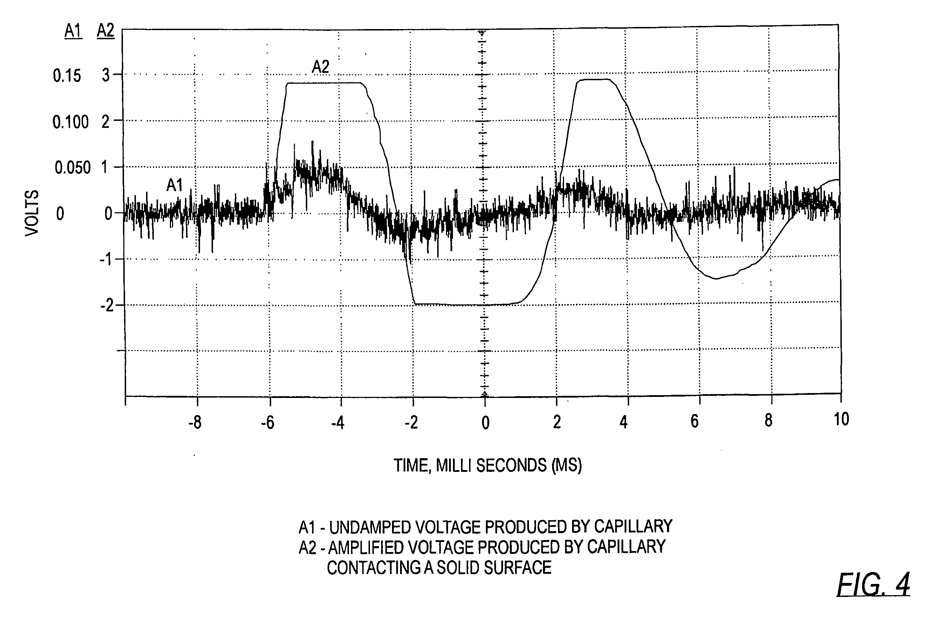

Figure 4 shows the "raw" voltage (A1) associated with a capillary when it is being moved, but not dispensing droplets. The scale for this data is 50 millivolts per division, indicating that the random noise is typically less than ± 50 millivolts. The actual voltage produced when a capillary contacts a solid surface is also small, in this Figure up to about 75 millivolts. The relatively small voltage excursion is amplified to provide a signal which is detected, as shown in the previous figures. This Figure illustrates the relationship between the actual voltage and the amplified signal. The "noise" is distributed uniformly about zero voltage and is filtered out. Only the excursion caused by contact of a capillary with a solid surface is amplified (A2).

Figure 5 is a block diagram illustrating the controls used to position the capillaries. The "tip detector" system receives the voltage being generated by a capillary, distinguishes between "noise" and a voltage generated by the piezoelectric transducer when the capillary contacts a solid surface, sends a signal to the motor control module to stop movement of the capillary. If no voltage excursion is detected, then the tip detection system signals the motor control module to continue its normal routine.

The diagram, omitting the tip detection system, illustrates the general operation of the microdrop dispensing apparatus. A capillary (or more typically multiple capillaries) is moved to a predetermined position and one or more drops are dispensed by applying a relatively high voltage to the piezoelectric transducer surrounding the capillary. Then, the capillary is moved to the next predetermined location by the positioning system as directed by the motor control module, which is instructed by the computer which controls the overall operation of the apparatus. The computer directs application of dispensing voltage to the capillary and also inactivates the tip detection system when voltage is to be applied to the transducer or at other times, such as when aspirating liquids or cleaning the capillaries.

The above discussion relates to a method in which the voltage created when a capillary contacts a solid surface is distinguished from random "noise" and used to stop the relative movement of the capillary and a sample plate or surface with which the capillary is being used. Alternatively, the invention also includes a method in which the capillary is pulsed at its resonant frequency with a voltage which does not cause droplets to be expelled. An inverted phase is provided as a reference signal so that the two frequencies are in phase. When the capillary contacts a surface; the resonant frequency is shifted in phase from the inverted resonant frequency. By measuring the phase change relative to the inverted signal used as a reference, a signal is sent to the motor control module of Figure 5 to stop further movement.

The resonant frequency may be determined for each capillary by increasing the frequency of the applied voltage until the resonant frequency is reached. Then, in a preferred embodiment, an inverted signal at the resonant conditions for the capillary is created as a reference. The two are in phase with each other as long as the capillary is not touching a surface and is oscillating at its natural resonant frequency. However, when the capillary touches a surface, the oscillation of the capillary is no longer in phase with the inverted signal which had been created as a reference. Although the voltage change which results is small, the phase shift is large. One method of detecting this phase shift is to sum the reference signal with the signal from the capillary. Usually, the sum of the signals cancel each other out and result in a zero voltage reading. When the phase of the capillary changes only slightly, the sum of the signals is no longer zero. The voltage change is read as being the result of the capillary touching a surface, then a signal to the motor control unit stops movement of the capillary, in a similar manner as that described for the first embodiment.

### Detecting the Position of Surfaces

Although the invention has a particular value in preventing capillaries from being broken during operation of a microdrop dispensing apparatus, it can also be used to detect the position of surfaces. For example, in some applications it will be necessary to position droplets precisely on the surface of a flat slide. Since the capillary tip will closely approach the surface before dispensing a droplet, it is important to know where the surface is. As noted earlier, the approach distance may be about 0.4 mm. Where multiple droplets are to be rapidly dispensed, each at a different location on a slide, knowing where the surface is positioned is important. The invention can be used to locate the surface of a slide by the voltage change when contact is made or the voltage resulting from the phase shift compared to an inverted reference as in the second embodiment. In this use, no further movement toward the surface would made, but the motor control unit could be instructed to note the position of the surface for subsequent dispensing of droplets and to proceed with the regular dispensing program.

The same general method may be used to detect the position of a liquid surface, which might be liquid in a sample well or in a container from which liquid is to be aspirated. It is believed that the method of the second embodiment described above is especially useful in locating the position of liquid surfaces.

## Claims

1. A method of detecting contact between a surface and a capillary for dispensing liquids by action of a piezoelectric transducer disposed on said capillary comprising measuring the voltage produced by said piezoelectric transducer when said capillary contacts said solid surface.

2. A method of claim 1, wherein said produced voltage is measured when said capillary is not dispensing liquid.

3. A method of claim 1, wherein said produced voltage is distinguished from random voltage produced by the transducer from sources unrelated to dispensing liquids or contacting of said capillary with a surface.

4. A method of claim 3, wherein said produced voltage is amplified and compared with a baseline voltage.

5. A method of claim 1 wherein said voltage produced by said piezoelectric transducer is used to prevent further contact of said capillary with a surface by stopping movement of said capillary relative to said surface.

6. A method of detecting contact between a surface and a capillary for dispensing liquids by action of a piezoelectric transducer disposed on said capillary comprising:
(a) providing an oscillating voltage to said piezoelectric transducer at the resonant frequency of said capillary to establish a signal corresponding to the capillary and creating an inverted signal at the resonant conditions as a reference, whereby the signals of the capillary and the reference are in phase with each other,
(b) measuring the phase shift between the signals of (a) which results when said capillary contacts said surface and causes the signal of the capillary to change relative to said reference signal.

7. A method of claim 6, wherein said phase shift is measured when said capillary is not dispensing liquid.

8. A method of claim 6, wherein said piezoelectric transducer is supplied in (a) with a voltage lower than the voltage required to dispense liquids.

9. A method of claim 6, wherein said resonant frequency is predetermined and used in step (a).

10. A method of claim 6, wherein the signal of the capillary and the reference signal are summed and the resulting voltage change is measured to indicate said phase shift.

11. A method of claim 6 wherein said phase shift resulting from contact of said capillary with a surface is used to stop movement of said capillary relative to said surface.

12. An apparatus for dispensing microdrops of liquid comprising:
(a) at least one capillary for containing liquid and from which liquid microdrops are dispensed;
(b) a piezoelectric transducer disposed on said capillary, said transducer being actuated by a voltage pulse, thereby dispensing liquid microdrops;
**characterised in that** the apparatus further comprises
(c) means for measuring the voltage produced by said transducer when said capillary contacts a surface.

13. An apparatus of claim 12, wherein said produced voltage is at least 10 millivolts.

14. An apparatus of claim 12, wherein said produced voltage is distinguished from voltage produced by said transducer from random sources unrelated to dispensing liquids or contacting of said capillary with surfaces.

15. An apparatus for dispensing microdrops of liquid according to claim 12, wherein said transducer is actuated when a voltage pulse is applied to said transducer, whereby said transducer is exerting pressure on liquid in said capillary, the apparatus further comprising:
(d) means for positioning said capillary with respect to a predetermined location.

16. An apparatus of claim 15, wherein said piezoelectric transducer surrounds said capillary.

17. An apparatus of claim 15, wherein said voltage pulse of (b) is in the range of 40 to 300 volts.

18. An apparatus of claim 15, wherein said produced voltage of (c) is distinguished from voltage produced by said transducer from random unrelated sources.

19. An apparatus of claim 15, wherein further comprising means for preventing further contact of said capillary with said surface by stopping the means for positioning said at least one capillary.

20. An apparatus of claim 15, wherein said capillary is mounted on a movable support capable of positioning said capillary in a predetermined location.

21. An apparatus of claim 20, wherein said movable support is capable of positioning said capillary in a first location for aspirating said liquid and in a second location for dispensing microdrops of said liquid.

22. An apparatus of claim 21, wherein said first location is a well of a microplate and said second location is a planar surface.

23. An apparatus of claim 22, wherein said planar surface is a glass slide.

24. An apparatus of claim 15, wherein said capillary is mounted on a support and containers for said liquid and surfaces for receiving dispensed microdrops are mounted on movable supports capable of positioning said containers or surfaces under said capillary.

25. An apparatus of claim 24, wherein said container for liquid is a well of a microplate and said surface for receiving dispensed microdrops is a planar surface.

26. An apparatus of claim 25, wherein said planar surface is a glass slide.

27. An apparatus for dispensing microdrops of liquid comprising:
(a) at least one capillary for containing liquid and from which liquid microdrops are dispensed;
(b) a piezoelectric transducer disposed on said capillary, said transducer being actuated by a voltage pulse, thereby dispensing liquid microdrops;
**characterised in that** the apparatus further comprises
(c) means for supplying an oscillating voltage to said piezoelectric transducer at the resonant frequency of said capillary, and establishing a signal corresponding to the capillary, and creating an inverted signal at the resonant conditions as a reference in phase with the capillary signal, and
(d) means for measuring the phase shift when said capillary contacts said surface and causing the frequency of the capillary to change relative to the reference signal.

28. A capillary of claim 27, wherein said improvement further comprises a means for predetermining said resonant frequency.

29. A capillary of claim 28, wherein said voltage supplied to said capillary at its resonant frequency is lower than that required to dispense liquids.

30. An apparatus for dispensing microdrops of liquid according to claim 27, wherein said transducer is actuated when a voltage pulse is applied to said transducer, whereby said transducer is exerting pressure on liquid in said capillary, further comprising:
(e) means for positioning said at least one capillary with respect to a predetermined location.

31. An apparatus of claim 30, further comprising a means for determining said resonant frequency.

32. An apparatus of claim 30, wherein said means for measuring said phase shift includes means for summing the capillary signal and the inverted signal and measuring the resulting voltage and detecting a change.

33. An apparatus of claim 30, wherein said supplied voltage is lower than that required to dispense liquids.

34. An apparatus of claim 30, wherein said piezoelectric transducer surrounds said capillary.

35. An apparatus of claim 30, wherein said voltage pulse of (b) is in the range of 40 to 300 volts.

36. An apparatus of claim 30, wherein further comprising means for preventing further contact of said capillary with said surface by stopping the means for positioning said at least one capillary.

37. An apparatus of claim 30, wherein said capillary is mounted on a movable support capable of positioning said capillary in a predetermined location.

38. An apparatus of claim 37, wherein said movable support is capable of positioning said capillary in a first location for aspirating said liquid and in a second location for dispensing microdrops of said liquid.

39. An apparatus of claim 38, wherein said first location is a well of a microplate and said second location is a planar surface.

40. An apparatus of claim 39, wherein said planar surface is a glass slide.

41. An apparatus of claim 30, wherein said capillary is mounted on a support and containers for said liquid and surfaces for receiving dispensed microdrops are mounted on movable supports capable of positioning said containers or surfaces under said capillary.

42. An apparatus of claim 41, wherein said container for liquid is a well of a microplate and said surface for receiving dispensed microdrops is a planar surface.

43. An apparatus of claim 42, wherein said planar surface is a glass slide.

## Patentansprüche

1. Verfahren, mit dem Kontakt zwischen einer Fläche und einer Kapillare zum Abgeben von Flüssigkeiten durch die Wirkung eines piezoelektrischen Wandlers erfasst wird, der an der Kapillare angeordnet ist, wobei es Messen der Spannung umfasst, die durch den piezoelektrischen Wandler erzeugt wird, wenn die Kapillare mit der festen Fläche in Kontakt kommt.

2. Verfahren nach Anspruch 1, wobei die erzeugte Spannung gemessen wird, wenn die Kapillare keine Flüssigkeit abgibt.

3. Verfahren nach Anspruch 1, wobei die erzeugte Spannung von Zufallsspannung unterschieden wird, die durch den Wandler aus Quellen erzeugt wird, die nicht mit dem Abgeben von Flüssigkeiten oder dem Herstellen von Kontakt der Kapillare mit einer Fläche zusammenhängen.

4. Verfahren nach Anspruch 3, wobei die erzeugte Spannung verstärkt und mit einer Bezugsspannung verglichen wird.

5. Verfahren nach Anspruch 1, wobei die durch den piezoelektrischen Wandler erzeugte Spannung verwendet wird, um weiteren Kontakt der Kapillare mit einer Fläche zu verhindern, indem Bewegung der Kapillare relativ zu der Fläche angehalten wird.

6. Verfahren, mit dem Kontakt zwischen einer Fläche und einer Kapillare zum Abgeben von Flüssigkeiten durch die Wirkung eines piezoelektrischen Wandlers erfasst wird, der an der Kapillare angeordnet ist, wobei es umfasst:
a) Bereitstellen einer oszillierenden Spannung für den piezoelektrischen Wandler bei der Resonanzfrequenz der Kapillare, um ein Signal herzustellen, das der Kapillare entspricht, und Erzeugen eines invertierten Signals bei den Resonanzbedingungen als eine Bezugsgröße, wobei die Signale der Kapillare und der Bezugsgröße phasengleich zueinander sind,
b) Messen der Phasenverschiebung zwischen den Signalen von a), die entsteht, wenn die Kapillare mit der Fläche in Kontakt kommt und bewirkt, dass sich das Signal der Kapillare relativ zu dem Bezugssignal ändert.

7. Verfahren nach Anspruch 6, wobei die Phasenverschiebung gemessen wird, wenn die Kapillare keine Flüssigkeit abgibt.

8. Verfahren nach Anspruch 6, wobei dem piezoelektrischen Wandler in a) eine Spannung zugeführt wird, die niedriger ist als die zum Abgeben von Flüssigkeiten erforderliche Spannung.

9. Verfahren nach Anspruch 6, wobei die Resonanzfrequenz vorgegeben ist und in Schritt a) verwendet wird.

10. Verfahren nach Anspruch 6, wobei das Signal der Kapillare und das Bezugsignal summiert werden und die resultierende Spannungsänderung gemessen wird, um die Phasenverschiebung anzuzeigen.

11. Verfahren nach Anspruch 6, wobei die Phasenverschiebung, die aus Kontakt der Kapillare mit einer Fläche resultiert, verwendet wird, um Bewegung der Kapillare relativ zu der Fläche anzuhalten.

12. Vorrichtung zum Abgeben von Mikrotropfen von Flüssigkeit, die umfasst:
a) wenigstens eine Kapillare, die Flüssigkeit enthält und aus der Flüssigkeits-Mikrotropfen abgegeben werden;
b) einen piezoelektrischen Wandler, der an der Kapillare angeordnet ist, wobei der Wandler durch einen Spannungsimpuls betätigt wird und so Flüssigkeits-Mikrotropfen abgibt;
**dadurch gekennzeichnet, dass** die Vorrichtung des Weiteren umfasst:
c) eine Einrichtung zum Messen der Spannung, die durch den Wandler erzeugt wird, wenn die Kapillare mit einer Fläche in Kontakt kommt.

13. Vorrichtung nach Anspruch 12, wobei die erzeugte Spannung wenigstens 10 Millivolt beträgt.

14. Vorrichtung nach Anspruch 12, wobei die erzeugte Spannung von Spannung unterschieden wird, die durch den Wandler aus zufälligen Quellen erzeugt wird, die nicht mit dem Abgeben von Flüssigkeiten oder dem Herstellen von Kontakt der Kapillare mit Flächen zusammenhängen.

15. Vorrichtung zum Abgeben von Mikrotropfen von Flüssigkeit nach Anspruch 12, wobei der Wandler betätigt wird, wenn ein Spannungsimpuls an den Wandler angelegt wird, der Wandler Druck auf Flüssigkeit in der Kapillare ausübt und die Vorrichtung des Weiteren umfasst:
d) eine Einrichtung zum Positionieren der Kapillare in Bezug auf einen vorgegebenen Ort.

16. Vorrichtung nach Anspruch 15, wobei der piezoelektrische Wandler die Kapillare umgibt.

17. Vorrichtung nach Anspruch 15, wobei der Spannungsimpuls von b) im Bereich von 40 bis 300 Volt liegt.

18. Vorrichtung nach Anspruch 15, wobei die erzeugte Spannung von c) von Spannung unterschieden wird, die durch den Wandler aus zufälligen nicht zusammenhängenden Quellen erzeugt wird.

19. Vorrichtung nach Anspruch 15, die des Weiteren eine Einrichtung umfasst, die weiteren Kontakt der Kapillare mit der Fläche verhindert, indem sie die Einrichtung zum Positionieren der wenigstens einen Kapillare anhält.

20. Vorrichtung nach Anspruch 15, wobei die Kapillare an einem beweglichen Träger angebracht ist, der in der Lage ist, die Kapillare an einem vorgegebenen Ort zu positionieren.

21. Vorrichtung nach Anspruch 20, wobei der bewegliche Träger in der Lage ist, die Kapillare an einem ersten Ort zum Ansaugen der Flüssigkeit und an einem zweiten Ort zum Abgeben von Mikrotropfen der Flüssigkeit zu positionieren.

22. Vorrichtung nach Anspruch 21, wobei der erste Ort eine Vertiefung einer Mikroplatte ist und der zweite Ort eine plane Fläche ist.

23. Vorrichtung nach Anspruch 22, wobei die plane Fläche ein Glas-Objektträger ist.

24. Vorrichtung nach Anspruch 15, wobei die Kapillare an einem Träger angebracht ist und Behälter für die Flüssigkeit sowie Flächen zum Aufnehmen abgegebener Mikrotropfen an beweglichen Trägern angebracht sind, die in der Lage sind, die Behälter oder Flächen unter der Kapillare zu positionieren.

25. Vorrichtung nach Anspruch 24, wobei der Behälter für Flüssigkeit eine Vertiefung einer Mikroplatte ist und die Fläche zum Aufnehmen abgegebener Mikrotropfen eine plane Fläche ist.

26. Vorrichtung nach Anspruch 25, wobei die plane Fläche ein Glas-Objektträger ist.

27. Vorrichtung zum Abgeben von Mikrotropfen von Flüssigkeit, die umfasst:
a) wenigstens eine Kapillare, die Flüssigkeit enthält und aus der Flüssigkeits-Mikrotropfen abgegeben werden;
b) einen piezoelektrischen Wandler, der an der Kapillare angeordnet ist, wobei der Wandler durch einen Spannungsimpuls betätigt wird und so Flüssigkeits-Mikrotropfen abgibt;
**dadurch gekennzeichnet**, das die Vorrichtung des Weiteren umfasst:
c) eine Einrichtung zum Zuführen einer oszillierenden Spannung zu dem piezoelektrischen Wandler bei der Resonanzfrequenz der Kapillare und zum Herstellen eines Signals, das der Kapillare entspricht, sowie zum Erzeugen eines invertierten Signals bei den Resonanzbedingungen als eine Bezugsgröße, die phasengleich zu dem Kapillaren-Signal ist, und
d) eine Einrichtung, die die Phasenverschiebung misst, wenn die Kapillare mit der Fläche in Kontakt kommt, und bewirkt, dass sich die Frequenz der Kapillare relativ zu dem Bezugssignal ändert.

28. Kapillare nach Anspruch 27, wobei die Verbesserung des Weiteren eine Einrichtung zum Vorgeben der Resonanzfrequenz umfasst.

29. Kapillare nach Anspruch 28, wobei die der Kapillare bei ihrer Resonanzfrequenz zugeführte Spannung niedriger ist als die zum Abgeben von Flüssigkeit erforderliche.

30. Vorrichtung zum Abgeben von Mikrotropfen von Flüssigkeit nach Anspruch 27, wobei der Wandler betätigt wird, wenn ein Spannungsimpuls an den Wandler angelegt wird, so dass der Wandler Druck auf Flüssigkeit in der Kapillare ausübt, und die des Weiteren umfasst:
e) eine Einrichtung zum Positionieren der wenigstens einen Kapillare in Bezug auf einen vorgegebene Ort.

31. Vorrichtung nach Anspruch 30, die des Weiteren eine Einrichtung zum Bestimmen der Resonanzfrequenz umfasst.

32. Vorrichtung nach Anspruch 30, wobei die Einrichtung zum Erfassen der Phasenverschiebung eine Einrichtung zum Summieren des Kapillar-Signals und des invertierten Signals sowie zum Messen der resultierenden Spannung und zum Erfassen einer Änderung enthält.

33. Vorrichtung nach Anspruch 30, wobei die zugeführte Spannung niedriger ist als die zum Abgeben von Flüssigkeiten erforderliche.

34. Vorrichtung nach Anspruch 30, wobei der piezoelektrische Wandler die Kapillare umgibt.

35. Vorrichtung nach Anspruch 30, wobei der Spannungsimpuls von b) im Bereich von 40 bis 300 Volt liegt.

36. Vorrichtung nach Anspruch 30, die des Weiteren eine Einrichtung umfasst, die weiteren Kontakt der Kapillare mit der Fläche verhindert, indem sie die Einrichtung zum Positionieren der wenigstens einen Kapillare anhält.

37. Vorrichtung nach Anspruch 30, wobei die Kapillare an einem beweglichen Träger angebracht ist, der in der Lage ist, die Kapillare an einem vorgegebenen Ort zu positionieren.

38. Vorrichtung nach Anspruch 37, wobei der bewegliche Träger in der Lage ist, die Kapillare an einem ersten Ort zum Ansaugen der Flüssigkeit und an einem zweiten Ort zum Abgeben von Mikrotropfen der Flüssigkeit zu positionieren.

39. Vorrichtung nach Anspruch 38, wobei der erste Ort eine Vertiefung einer Mikroplatte ist und der zweite Ort eine plane Fläche ist.

40. Vorrichtung nach Anspruch 39, wobei die plane Fläche ein Glas-Objektträger ist.

41. Vorrichtung nach Anspruch 30, wobei die Kapillare an einem Träger angebracht ist und Behälter für die Flüssigkeit sowie Flächen zum Aufnehmen abgegebener Mikrotropfen an beweglichen Trägern angebracht sind, die in der Lage sind, die Behälter oder Flächen unter der Kapillare zu positionieren.

42. Vorrichtung nach Anspruch 41, wobei der Behälter für Flüssigkeit eine Vertiefung einer Mikroplatte ist und die Fläche zum Aufnehmen abgegebener Mikrotropfen eine plane Fläche ist.

43. Vorrichtung nach Anspruch 42, wobei die plane Fläche ein Glas-Objektträger ist.

## Revendications

1. Procédé pour détecter un contact entre une surface et un capillaire pour distribuer des liquides par l'action d'un transducteur piézoélectrique disposé sur ledit capillaire, consistant à mesurer la tension produite par ledit transducteur piézoélectrique quand ledit capillaire est en contact avec ladite surface solide.

2. Procédé selon la revendication 1, dans lequel ladite tension produite est mesurée quand ledit capillaire ne distribue pas de liquide.

3. Procédé selon la revendication 1, dans lequel ladite tension produite est distinguée d'une tension aléatoire produite par le transducteur provenant de sources sans rapport avec une distribution de liquides ou un contact dudit capillaire avec une surface.

4. Procédé selon la revendication 3, dans lequel ladite tension produite est amplifiée et comparée à une tension de ligne de base.

5. Procédé selon la revendication 1, dans lequel ladite tension produite par ledit transducteur piézoélectrique est utilisée pour empêcher un contact ultérieur dudit capillaire avec une surface en arrêtant le mouvement dudit capillaire par rapport à ladite surface.

6. Procédé pour détecter un contact entre une surface et un capillaire pour distribuer des liquides par l'action d'un transducteur piézoélectrique disposé sur ledit capillaire, consistant à :
(a) délivrer une tension oscillante audit transducteur piézoélectrique à la fréquence de résonance dudit capillaire pour établir un signal correspondant au capillaire et créer un signal inversé dans les conditions de résonance comme une référence, moyennant quoi les signaux du capillaire et la référence sont en phase entre eux,
(b) mesurer le déphasage entre les signaux de (a), qui résulte quand ledit capillaire est en contact avec ladite surface et force le signal du capillaire à changer par rapport audit signal de référence.

7. Procédé selon la revendication 6, dans lequel ledit déphasage est mesuré quand ledit capillaire ne distribue pas de liquide.

8. Procédé selon la revendication 6, dans lequel ledit transducteur piézoélectrique est alimenté en (a) avec une tension inférieure à la tension nécessaire pour distribuer des liquides.

9. Procédé selon la revendication 6, dans lequel ladite fréquence de résonance est prédéterminée et utilisée dans l'étape (a).

10. Procédé selon la revendication 6, dans lequel le signal du capillaire et le signal de référence sont additionnés et la variation de la tension résultante est mesurée pour indiquer ledit déphasage.

11. Procédé selon la revendication 6, dans lequel ledit déphasage résultant du contact dudit capillaire avec une surface est utilisé pour arrêter le mouvement dudit capillaire par rapport à ladite surface.

12. Appareil pour distribuer des microgouttes de liquide, comprenant :
(a) au moins un capillaire pour contenir du liquide et à partir duquel des microgouttes de liquide sont distribuées ;
(b) un transducteur piézoélectrique disposé sur ledit capillaire, ledit transducteur étant actionné par une impulsion de tension, en distribuant ainsi des microgouttes de liquide ;
**caractérisé en ce que** l'appareil comprend en outre :
(c) des moyens pour mesurer la tension produite par ledit transducteur quand ledit capillaire est en contact avec une surface.

13. Appareil selon la revendication 12, dans lequel ladite tension produite est d'au moins 10 millivolts.

14. Appareil selon la revendication 12, dans lequel ladite tension produite est distinguée d'une tension produite par ledit transducteur provenant de sources aléatoires sans rapport avec une distribution de liquides ou un contact dudit capillaire avec des surfaces.

15. Appareil pour distribuer des microgouttes de liquide selon la revendication 12, dans lequel ledit transducteur est actionné quand une impulsion de tension est appliquée audit transducteur, moyennant quoi ledit transducteur exerce une pression sur le liquide dans ledit capillaire, l'appareil comprenant en outre :
(d) des moyens pour positionner ledit capillaire par rapport à une position prédéterminée.

16. Appareil selon la revendication 15, dans lequel ledit transducteur piézoélectrique entoure ledit capillaire.

17. Appareil selon la revendication 15, dans lequel ladite impulsion de tension de (b) est dans la plage de 40 à 300 volts.

18. Appareil selon la revendication 15, dans lequel ladite tension produite de (c) est distinguée d'une tension produite par ledit transducteur provenant de sources aléatoires sans rapport.

19. Appareil selon la revendication 15, comprenant en outre des moyens pour empêcher un contact ultérieur dudit capillaire avec ladite surface en arrêtant les moyens pour positionner ledit au moins un capillaire.

20. Appareil selon la revendication 15, dans lequel ledit capillaire est monté sur un support mobile capable de positionner ledit capillaire dans une position prédéterminée.

21. Appareil selon la revendication 20, dans lequel ledit support mobile est capable de positionner ledit capillaire dans une première position pour aspirer ledit liquide et dans une deuxième position pour distribuer des microgouttes dudit liquide.

22. Appareil selon la revendication 21, dans lequel la première position est un puits d'une microplaque et ladite deuxième position est une surface plane.

23. Appareil selon la revendication 22, dans lequel ladite surface plane est une lame de verre.

24. Appareil selon la revendication 15, dans lequel ledit capillaire est monté sur un support et des récipients pour ledit liquide et des surfaces pour recevoir des microgouttes distribuées sont montés sur des supports mobiles capable de positionner lesdits récipients ou surfaces sous ledit capillaire.

25. Appareil selon la revendication 24, dans lequel ledit récipient pour liquide est un puits d'une microplaque et ladite surface pour recevoir des microgouttes distribuées est une surface plane.

26. Appareil selon la revendication 25, dans lequel ladite surface plane est une lame de verre.

27. Appareil pour distribuer des microgouttes de liquide, comprenant :
(a) au moins un capillaire pour contenir du liquide et à partir duquel des microgouttes de liquide sont distribuées ;
(b) un transducteur piézoélectrique disposé sur ledit capillaire, ledit transducteur étant actionné par une impulsion de tension, en distribuant ainsi des microgouttes de liquide ;
**caractérisé en ce que** le l'appareil comprend en outre :
(c) des moyens pour délivrer une tension oscillante audit transducteur piézoélectrique à la fréquence de résonance dudit capillaire et établir un signal correspondant au capillaire et créer un signal inversé dans les conditions de résonance comme une référence en phase avec le signal du capillaire, et
(d) des moyens pour mesurer le déphasage quand ledit capillaire est en contact avec ladite surface et force le signal du capillaire à changer par rapport audit signal de référence.

28. Capillaire selon la revendication 27, dans lequel ladite amélioration comprend en outre un moyen pour prédéterminer ladite fréquence de résonance.

29. Capillaire selon la revendication 28, dans lequel ladite tension délivrée audit capillaire à sa fréquence de résonance est inférieure à la tension nécessaire pour distribuer des liquides.

30. Appareil pour distribuer des microgouttes de liquide selon la revendication 27, dans lequel ledit transducteur est actionné quand une impulsion de tension est appliquée audit transducteur, moyennant quoi ledit transducteur exerce une pression sur le liquide dans ledit capillaire, l'appareil comprenant en outre :
(e) des moyens pour positionner ledit au moins un capillaire par rapport à une position prédéterminée.

31. Appareil selon la revendication 30, comprenant en outre un moyen pour déterminer ladite fréquence de résonance.

32. Appareil selon la revendication 30, dans lequel lesdits moyens pour mesurer ledit déphasage comprennent des moyens pour additionner le signal du capillaire et le signal inversé et mesurer la tension résultante et détecter une variation.

33. Appareil selon la revendication 30, dans lequel ladite tension délivrée est inférieure à celle nécessaire pour distribuer des liquides.

34. Appareil selon la revendication 30, dans lequel ledit transducteur piézoélectrique entoure ledit capillaire.

35. Appareil selon la revendication 30, dans lequel ladite impulsion de tension de (b) est dans la plage de 40 à 300 volts.

36. Appareil selon la revendication 30, comprenant en outre des moyens pour empêcher un contact ultérieur dudit capillaire avec ladite surface en arrêtant les moyens pour positionner ledit au moins un capillaire.

37. Appareil selon la revendication 30, dans lequel ledit capillaire est monté sur un support mobile capable de positionner ledit capillaire dans une position prédéterminée.

38. Appareil selon la revendication 37, dans lequel ledit support mobile est capable de positionner ledit capillaire dans une première position pour aspirer ledit liquide et dans une deuxième position pour distribuer des microgouttes dudit liquide.

39. Appareil selon la revendication 38, dans lequel la première position est un puits d'une microplaque et ladite deuxième position est une surface plane.

40. Appareil selon la revendication 39, dans lequel ladite surface plane est une lame de verre.

41. Appareil selon la revendication 30, dans lequel ledit capillaire est monté sur un support et des récipients pour ledit liquide et des surfaces pour recevoir des microgouttes distribuées sont montés sur des supports mobiles capable de positionner lesdits récipients ou surfaces sous ledit capillaire.

42. Appareil selon la revendication 41, dans lequel ledit récipient pour liquide est un puits d'une microplaque et ladite surface pour recevoir des microgouttes distribuées est une surface plane.

43. Appareil selon la revendication 42, dans lequel ladite surface plane est une lame de verre.
